# EUROPEAN PATENT APPLICATION

(11) **EP 1 431 632 A2**
(43) Date of publication of application: **23.06.2004**
(21) Application number: 03257419.6
(22) Date of filing: 25.11.2003
(51) Int. Cl.: F16J 15/32

(54) **Lip seal wear sleeve**

(30) Priority: 16.12.2002 US 320008
(71) Applicant: CARRIER CORPORATION, Syracuse New York 13221 (US)
(72) Inventor: Wright, Kenneth A., Syracuse, New York 13207 (US); Wyker, Christopher A., Liverpool, New York 13088 (US); Duppert, Ronald J., Fayetteville, New York 13066 (US)
(74) Representative: Leckey, David H.

(57) **Abstract**

A crankshaft (18) for use in a compressor that incorporates a lip seal (38) includes a first material forming the crankshaft, an area on the crankshaft (18) that engages the lip seal (38), and protection for the crankshaft (18) from wear due to frictional contact with the lip seal (38). The protection includes a secondary material added to the crankshaft (18) causing a hardened surface of the crankshaft (18) at the area. The protection is preferably in the form of a wear sleeve (48) on the crankshaft (18). The wear sleeve (48) is formed from a second material which wears less than the first material while in contact with the lip seal (38) and the wear sleeve (48) is formed separate from the crankshaft (18) and removable for replacement.

## Description

### BACKGROUND OF THE INVENTION

### 1. Field of the Invention

The present invention relates to compressor lip seals. More particularly, the present invention is directed to a shaft wear sleeve for protecting a crankshaft from excessive wear caused by lip seal friction.

### 2. Background Art

Refrigeration systems, such as the type used in transport refrigeration equipment, include, in the simplest form, a compressor, a condenser, an expansion device and an evaporator serially interconnected to form a closed refrigeration circulation path. In systems that use a reciprocating type compressor, these systems must be lubricated by a lubricating oil which mixes with the refrigerant being compressed therein.

A typical reciprocating compressor includes a piston reciprocating within a cylinder for mechanically compressing gaseous refrigerant. Appropriate manifolds and valves are provided to allow gas to be drawn into the cylinder during the down stroke of the piston and to be compressed during the up stroke.

Oil is used in such compressors to lubricate the various parts and interfaces there between. To maintain refrigerant pressure within the compressor in an open drive configuration where the drive is external to the compressor, a mechanical shaft seal is used. The compressor oil pump deploys an oil film to seal against the leakage of pressurized gas and to lubricate the faces of the seal during operation. For example, mechanical shaft seals are used on the crankshaft of the compressor where the crankshaft exits the compressor crankcase in the vicinity of the gland plate. Crankshafts of such compressors may also employ additional seals, typically a lip seal, for keeping external contamination out of the compressor. Accordingly, lip seals are usually the last line of defense of the internal workings of the compressor and are external to the mechanical shaft seal and most typically located at the gland plate assembly.

Lip Seals are usually formed from a material that will endure the constant rotation of crankshafts. The lip seal material is resilient to the rotational motion and incorporates a radial spring behind the lip that forces it into contact with the crankshaft under operation. This continuous contact and rotational motion demands an improved shaft surface both in hardness and surface quality (roughness) to withstand premature degradation of the lip seal / crankshaft interface. Because of this, in the prior art, lip seals have the tendency to wear down the crankshaft at the areas of contact with the shaft if the shafts are not sufficiently hardened and machined to an acceptable surface quality. The wear on the crankshaft from the lip seal can form a clearance path from the machining action. This condition can lead to the intrusion of dirt into the compressor cavity, damaging the inner mechanisms of the compressor, and/or allowing excessive leakage of oil to the compressor exterior, and more significantly can lead to required shaft replacement, an expensive and potentially very laborious job.

### SUMMARY OF THE INVENTION

It is an object of the present invention to improve the life of compressor crankshafts.

It is a further object of the present invention to provide a crankshaft design to prevent shaft wear due to the lip-seal interface and accordingly increase crankshaft life and reduce compressor maintenance.

These and other objects of the present invention are achieved according to the crankshaft of the present invention for use in a compressor that incorporates a lip seal. The crankshaft includes a first material forming the crankshaft, an area on the crankshaft that engages the lip seal, and protection for the crankshaft from wear due to frictional contact with the lip seal. The protection includes a secondary material added to the crankshaft causing a hardened surface of the crankshaft at the area. The protection is preferably in the form of a wear sleeve on the crankshaft. The wear sleeve is formed from a second material which wears less than the first material while in contact with the lip seal and the wear sleeve is formed separate from the crankshaft and removable for replacement.

### BRIEF DESCRIPTION OF THE DRAWINGS

FIG. 1 is a schematic, partially cross-sectional view of a reciprocating compressor incorporating the device of the present invention;
FIG 2 is an enlarged, partially cross-sectional view of the crankshaft seal area of FIG. 1, including the lip seal;
FIG. 3 is a further enlarged view of the crankshaft, shaft seal and lip seal mechanisms; and
FIG. 4 is a simplified view of the shaft and perspective view of the wear sleeve, showing their assembly, according to the principles of the present invention.

### DESCRIPTION OF THE PREFERRED EMBODIMENT

The invention as described herein will refer to a reciprocating compressor for use with an air conditioning or refrigeration system. Although this compressor is shown in a configuration and described relative to incorporation with a refrigeration circuit within an air conditioning system or a refrigeration system it is to be understood that this method of oil collection, lubrication and diversion is equally applicable to other types of compressors, pumps and other applications.

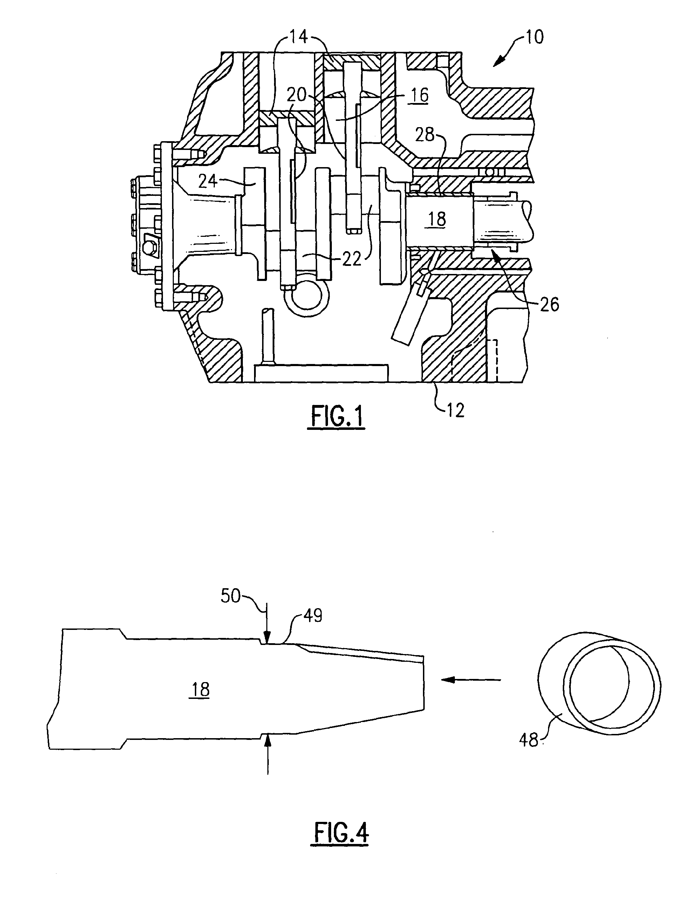

Referring now to FIG. 1, shown is a compressor 10 including shell 12. Working pistons 14 are mounted for reciprocating movement within cylinders 16. Each piston is connected to crankshaft 18 via a connecting rod 20. Connecting rod 20 is secured around offset portion 22 of crankshaft 18. Crankshaft 18 includes counterbalance 24 for balancing the rotational irregularities in the crankshaft. The crankshaft is mounted and rotates within sleeve 28 and extends through shaft seal cavity 26 of housing 12.

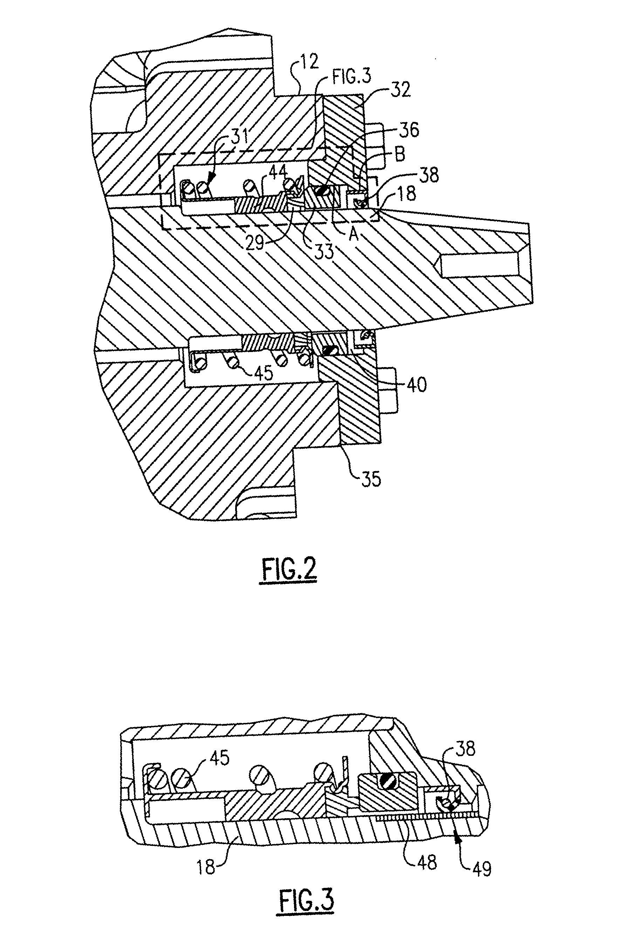

Referring to FIG. 2 and 4, the crankshaft seal mechanism 31 is shown in greater detail at the point where the housing 12 is exited by the crankshaft. The crankshaft 18 passes through the mechanical shaft seal spring assembly 45, shaft seal faces 29 and 33, gland plate 32 and lip seal 38 having wear surfaces 39. As shown in FIG. 3, a gland plate gasket 35 is used to prevent seepage between the housing and the gland plate. The face seal 33 is substantially cylindrical in shape and includes an O-ring 36, which holds it stationary within inner diameter A of the gland plate 32. The lip seal 38, secured in gland plate 32 adjacent to but spaced from diameter A, in smaller diameter B, has the function of preventing dirt from entering the shaft seal cavity.

The crankshaft seal mechanism further includes a cylindrical body 44 formed from a resilient material, using oil between it and the crankshaft to act as a refrigerant seal. The spring 45 wrapped around the exterior of the body 44 and resting against the crankshaft seal thrust face 43 provides axial loading between the two shaft face seals 29 and 33.

The invention as provided herein operates to protect crankshaft 18 from excessive wear due to frictional contact with the lip seal 38. Accordingly, the crankshaft 18, in the preferred embodiment, includes a material added thereto having a hardened surface relative the crankshaft, and in particular, a replaceable wear sleeve 48 which is formed separately from the crankshaft, and is attached to the crankshaft in the area 49 of contact with lip-seal 38. The wear sleeve is cylindrical in shape as shown in FIG. 4, and fits over and is secured to crankshaft 18, which has a reduced diameter portion 50 machined to receive the wear sleeve. The wear sleeve may be attached to the shaft in known manners such as through adhesive bonding, welding or force fit sizing. The wear sleeve may also be in multiple segments and attached through welding or adhesive bonding. The wear sleeve is preferably formed from a hardened steel, having a hardness greater than that of the crankshaft 18 and at an acceptable hardness level described by the lip seal manufacturer. The wear sleeve is also produced in such a manner as to achieve an acceptable surface quality (roughness), a secondary requirement of the lip seal manufacturer.

While the invention has been described in reference to a preferred embodiment and a particular type of compressor, it is to be understood by those skilled in the art that modifications and variations can be effected within the spirit and scope of the invention and the invention could be applied to different types of compressors or other mechanisms incorporating similar type shaft seals.

## Claims

1. A crankshaft (18) for use in a compressor or other machine that incorporates a lip seal (38), comprising:
a first material forming the crankshaft (18);
an area on the crankshaft that engages the lip seal (38); and
means for protecting the crankshaft (18) from wear due to frictional contact with the lip seal (38).

2. The crankshaft according to claim 1, wherein said means for protecting comprises a secondary material added to said crankshaft causing a hardened surface of the crankshaft (18) at said area.

3. The crankshaft according to claim 1, wherein said means for protecting comprises a wear sleeve (48) on the crankshaft (18).

4. The crankshaft according to claim 3, wherein said wear sleeve (48) is formed from a second material which wears less than said first material while in contact with the lip seal (38).

5. The crankshaft according to claim 3 or 4, wherein said wear sleeve (48) is formed separate from said crankshaft (18) and removable for replacement.
